(19) Europäisches Patentamt
European Patent Office
Office européen des brevets

(11) **EP 1 920 144 B1**

(12) **FASCICULE DE BREVET EUROPEEN**

(45) Date de publication et mention
de la délivrance du brevet:
**19.08.2009 Bulletin 2009/34**

(51) Int Cl.:
*F02D 35/02* (2006.01)   *G01M 15/08* (2006.01)

(21) Numéro de dépôt: **06779002.2**

(86) Numéro de dépôt international:
**PCT/FR2006/050659**

(22) Date de dépôt: **30.06.2006**

(87) Numéro de publication internationale:
**WO 2007/010154 (25.01.2007 Gazette 2007/04)**

(54) **DISPOSITIF POUR LA DETECTION EN TEMPS REEL DU COMMENCEMENT DE LA PHASE DE COMBUSTION ET PROCEDE CORRESPONDANT**

VORRICHTUNG ZUR ECHTZEITERFASSUNG DES BEGINNS DER VERBRENNUNGSPHASE UND ENTSPRECHENDES VERFAHREN

DEVICE FOR DETECTING IN REAL TIME THE BEGINNING OF THE COMBUSTION PHASE AND CORRESPONDING METHOD

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.07.2005 FR 0507745**

(43) Date de publication de la demande:
**14.05.2008 Bulletin 2008/20**

(73) Titulaire: **RENAULT S.A.S.**
**92100 Boulogne Billancourt (FR)**

(72) Inventeurs:
• **BERTHE, Jean-Paul**
 **91470 Limours (FR)**
• **EMERY, Pascal**
 **92400 Courbevoie (FR)**

(74) Mandataire: **Guyon, Rodolphe C.**
 **Renault Technocentre**
 **Service 0267**
 **TCR GRA 236**
 **1, Avenue du Golf**
 **78288 Guyancourt Cedex (FR)**

(56) Documents cités:
**EP-A- 1 106 805        EP-A- 1 300 588**
**WO-A-95/16196        US-A1- 2002 073 940**

EP 1 920 144 B1

**Description**

La présente invention concerne d'une manière générale la détection en temps réel du commencement de la phase de combustion d'un moteur pour véhicule automobile. L'invention s'applique avantageusement aux moteurs à combustion interne essence ou diesel, par injection, directe ou indirecte de carburant à N cylindres.

Les normes européennes antipollution devenant de plus en plus sévères pour les moteurs de véhicules automobiles, il est important pour les constructeurs automobiles de réduire les émissions polluantes de leurs moteurs sans négliger leur consommation et leurs performances.

Pour atteindre ce résultat, une connaissance optimale des caractéristiques de la combustion du moteur est nécessaire, cette phase étant la phase prépondérante du cycle à quatre temps en ce qui concerne les émissions polluantes.

Plus précisément, l'instant où débute la combustion et en particulier l'angle vilebrequin de début de combustion (SOC) est particulièrement important puisqu'il agit sur le rendement de cycles thermodynamiques, et donc sur le couple, ainsi que sur le rendement de combustion.

Classiquement, les phénomènes d'admission, d'évacuation des gaz dans un moteur, ou encore les phénomènes de combustion sont étudiés en utilisant l'angle vilebrequin comme repère, au lieu du temps. L'origine est alors prise quand le piston est en position dite « Point Mort Haut » ou « PMH ». Ainsi, le moment où débutent les réactions chimiques de la combustion se situe en temps normal au voisinage de 0°, c'est-à-dire non loin du PMH.

Jusqu'à présent, le début de la combustion d'un moteur est rarement estimé en fonctionnement normal sur un moteur implanté dans un véhicule automobile. En outre, cette détection est généralement effectuée, grâce à des méthodes numériques basées sur des principes thermodynamiques ou de traitement numérique du signal comme par exemple la méthode décrite dans le brevet américain US 5,359,883 ou encore la demande de brevet internationale WO 02/48522. Ces méthodes détectent le commencement de la phase de combustion en calculant par exemple la dérivée de la pression dans la chambre de combustion (demande de brevet internationale WO 02/48522). Cette méthode est relativement simple et consiste à observer le comportement de la dérivée de la pression dans la chambre de combustion pendant la phase de combustion.

La dérivée de la pression comporte un pic représentatif de la brusque élévation de pression, trahissant le début de la combustion. Il est alors possible par l'application d'une valeur seuil de détecter un instant représentatif du commencement de la phase de combustion. Cependant, l'application d'une valeur de seuil est rendue difficile par plusieurs phénomènes. En effet, l'opération de dérivation du signal de pression entraîne l'amplification du bruit de mesure. Ce bruit est présent sur le signal pendant toute la phase de compression et contraint le choix de la valeur de seuil.

En outre, l'élévation rapide de la pression due à la simple compression des gaz enfermés dans la chambre de combustion engendre une valeur de dérivée non négligeable, et impose des contraintes supplémentaires sur le choix de la valeur de seuil. De plus, cette élévation normale de la pression pendant la phase de compression dépend du point de fonctionnement du moteur (pression et température des gaz admis, température des parois de la chambre, masse admise, etc...). De ce fait, lors de combustions peu vives, le pic de la dérivée dû à la combustion peut être inférieur au pic de la dérivée dû à la compression.

L'angle de début de combustion (SOC) est par conséquent difficilement identifiable à l'aide de cette méthode.

Une autre méthode possible consiste à étudier le comportement de la dérivée seconde de la pression cylindre pendant la phase de combustion. Cependant, la double dérivation engendre un niveau de bruit sur le signal très important.

Une autre méthode s'appuie sur le calcul du rapport des fonctions logarithmes de pression et de volume comme décrit dans le brevet américain US 5,359,883. Le calcul de ce rapport permet de détecter un changement de comportement du coefficient polytropique $\gamma$. Ce coefficient est à peu près constant pendant la phase de compression du cycle thermodynamique du moteur. Puis, pendant la phase de combustion, le comportement du coefficient polytropique change, ce qui se traduit par un changement de pente du tracé du cycle. Cette rupture de pente peut être détectée par exemple en appliquant un seuil sur la grandeur :

$$\frac{d}{dt}\left(\frac{\log p}{\log V}\right).$$

Cependant, l'opération engendre aussi un bruit de mesure important.

La demande de brevet US 2003/0145829 propose de détecter le commencement de la phase de combustion en étudiant le profil de la pression de cylindre auquel il est appliqué une transformation en ondelettes. Cette méthode est particulièrement lourde à mettre en oeuvre et nécessite un temps de calcul élevé, ce qui rend très difficile son utilisation à bord d'un véhicule.

D'autres méthodes, présentées par exemple dans la demande internationale WO 02/25237 et la demande européenne EP-1 092 968 proposent de détecter le début de la combustion à l'aide d'un accéléromètre. Cette méthode est peu robuste et peu précise. En outre elle nécessite un traitement de signal complexe, étant donné que l'accéléromètre utilisé capte de nombreux signaux parasites, tels que les signaux liés à l'ouverture et la fermeture des soupapes.

L'invention vise à apporter une solution à ces problèmes à l'aide d'un dispositif et d'un procédé différents des dispositifs existants.

L'invention cherche à détecter le commencement de la phase de combustion d'un moteur à l'aide d'une méthode simple à mettre en oeuvre tout en étant robuste et précise quant à l'instant détecté.

A cet effet, selon un premier aspect de l'invention, il est proposé un dispositif pour la détection en temps réel du commencement de la phase de combustion d'un moteur à combustion interne, notamment pour véhicule automobile.

Selon une caractéristique générale de ce premier aspect de l'invention, le dispositif comprend un moyen de calcul d'une variable représentative de l'évolution de la combustion en fonction de la pression de la chambre de combustion et de l'angle vilebrequin, et un moyen de comparaison de ladite variable avec un seuil de façon à déterminer l'état de la combustion dudit moteur. Ladite variable est fonction de la dérivée de la quantité d'énergie présente dans les gaz de la chambre de combustion par rapport à l'angle vilebrequin.

Ce dispositif a pour avantage de pouvoir estimer le commencement de la phase de combustion d'une manière simple et en temps réel.

Selon un mode de réalisation, le moyen de calcul de ladite variable comprend un moyen de lissage de la courbe représentative de la dérivée de la quantité d'énergie présente dans les gaz de la chambre de combustion par rapport à l'angle de vilebrequin, ledit moyen de lissage étant apte à diviser ladite dérivée par le volume de la chambre de combustion tel que :

$$C = \frac{1}{V} \frac{dQ}{d\theta},$$

où :

    C est ladite variable,
    V représente le volume de la chambre de combustion,
    Q représente la quantité d'énergie présente dans les gaz de la chambre de combustion,
    θ représente l'angle vilebrequin.

La division par le volume V a pour avantage de diminuer l'amplitude du bruit sur le dégagement d'énergie notamment aux instants où le bruit est le plus important, c'est-à-dire après et avant les points morts bas. Ainsi, ce calcul amplifie le signal lorsque cela est utile pour la détection du commencement de la phase de combustion. Cette opération a donc pour avantage d'augmenter le rapport signal/bruit et de diminuer les contraintes sur le filtrage de la pression à mettre en place.

De préférence, le moyen de calcul de ladite variable peut comprendre un premier moyen de calcul du volume de la chambre de combustion en fonction de la valeur de l'angle vilebrequin, un deuxième moyen de calcul de la température dans la chambre de combustion en fonction du volume calculé et de la pression dans la chambre de combustion, et un troisième moyen de calcul de ladite variable en fonction de la pression dans la chambre de combustion, de la température et du volume calculés.

De préférence, le deuxième moyen de calcul est apte à calculer la température dans la chambre de combustion de manière récursive à partir de la température initiale dans la chambre de combustion et pour une variation de l'angle vilebrequin d'un pas prédéterminé.

En discrétisant l'expression de la dérivée de la température, on élimine une source de bruit potentielle pour le calcul engendré par le calcul de dérivées, notamment la dérivée de la pression dont dépend la dérivée de la quantité d'énergie présente dans la chambre de combustion selon l'expression du dégagement d'énergie bien connue de l'homme du métier.

Le dispositif tel que décrit précédemment peut être embarqué à bord d'un véhicule automobile pour l'estimation et/ou la régulation du bruit du moteur à combustion interne équipant le véhicule.

Le dispositif tel que défini précédemment peut être embarqué à bord d'un véhicule automobile pour l'optimisation du couple du moteur à combustion interne équipant le véhicule.

Le dispositif tel que décrit précédemment peut être embarqué à bord d'un véhicule automobile pour l'ajustage des quantités de carburant injectées au cours de la combustion du moteur à combustion interne équipant le véhicule.

Le dispositif tel que décrit précédemment peut être utilisé pour la mise au point d'un moteur sur un banc de tests.

Selon un deuxième aspect de l'invention, il est également proposé un procédé de détection en temps réel du commencement de la phase de combustion d'un moteur à combustion interne, notamment pour véhicule automobile.

Selon une caractéristique générale de ce deuxième aspect de l'invention, ce procédé comprend une phase de calcul d'une variable représentative de l'évolution de la combustion en fonction de la pression de la chambre de combustion et de l'angle vilebrequin, et une phase de comparaison de ladite variable avec un seuil de façon à déterminer l'état de la combustion dudit moteur. Ladite variable est calculée en fonction de la dérivée de la quantité d'énergie présente dans les gaz de la chambre de combustion par rapport à l'angle vilebrequin.

Selon un mode de mise en oeuvre, la phase de calcul comprend une étape de lissage de la courbe représentative de la dérivée de la quantité d'énergie présente dans les gaz de la chambre de combustion par rapport à l'angle vilebrequin, en divisant ladite dérivée par le volume de la chambre de combustion tel que :

$$C = \frac{1}{V}\frac{dQ}{d\theta},$$

où :

C est ladite variable,
V représente le volume de la chambre de combustion,
Q représente la quantité d'énergie présente dans les gaz de la chambre de combustion,
θ représente l'angle vilebrequin.

Le calcul de ladite variable peut comprendre de préférence un premier calcul du volume de la chambre de combustion à partir de la valeur de l'angle vilebrequin, un deuxième calcul de la température dans la chambre de combustion à partir du volume calculé et de la pression dans la chambre de combustion et un troisième calcul de la variable à partir de la pression dans la chambre de combustion, de la température et du volume calculé tel que pour une masse de gaz dans le cylindre constant :

$$C = \frac{1}{V}\frac{dQ}{d\theta} = \frac{1}{\gamma - 1}\left(\frac{p}{T}\frac{dT}{d\theta}\right) + \frac{p}{V}\frac{dV}{d\theta},$$

où :

C est ladite variable,
V représente le volume de la chambre de combustion,
Q représente la quantité d'énergie présente dans les gaz de la chambre de combustion,
p représente la pression dans la chambre de combustion,
θ représente l'angle vilebrequin,
T représente la température dans la chambre de combustion,
γ représente un rapport de la chaleur massique à pression constante sur la chaleur massique à volume constant.

De préférence, on calcule la température de manière récursive à partir de la température initiale dans la chambre de combustion et pour une variation de l'angle vilebrequin d'un pas prédéterminé :

$$T_\theta = T_{\theta - \Delta\theta}\left(\frac{1}{\dfrac{p_{\theta - \Delta\theta}}{p_\theta} + \dfrac{V_{\theta - \Delta\theta}}{V_\theta} - 1}\right),$$

où :

θ représente l'angle vilebrequin,
$T_\theta$ représente la température dans la chambre de combustion pour un angle vilebrequin θ,

$\Delta\theta$ représente le pas de variation de l'angle vilebrequin $\theta$,

$T_{\theta-\Delta\theta}$ représente la température dans la chambre de combustion pour un angle vilebrequin $\theta-\Delta\theta$,

$P_{\theta}$ représente la pression dans la chambre de combustion pour un angle vilebrequin $\theta$,

$P_{\theta-\Delta\theta}$ représente la pression dans la chambre de combustion pour un angle vilebrequin $\theta-\Delta\theta$,

$V_{\theta}$ représente le volume dans la chambre de combustion pour un angle vilebrequin $\theta$,

$V_{\theta-\Delta\theta}$ représente le volume dans la chambre de combustion pour un angle vilebrequin $\theta-\Delta\theta$,

D'autres avantages et caractéristiques de l'invention apparaîtront à l'examen de la description détaillée d'un mode de réalisation et d'un mode de mise en oeuvre nullement limitatif et des dessins annexés, sur lesquels :

- la figure 1 représente très schématiquement un moteur à combustion interne associé à un dispositif pour la détection du commencement de la phase de combustion selon l'invention ;
- la figure 2 représente très schématiquement un mode de réalisation du dispositif selon l'invention ; et
- la figure 3 représente un mode de mise en oeuvre du procédé selon l'invention.
- la figure 4 représente très schématiquement et plus en détail une partie du dispositif selon l'invention telle que représentée sur la figure 2,

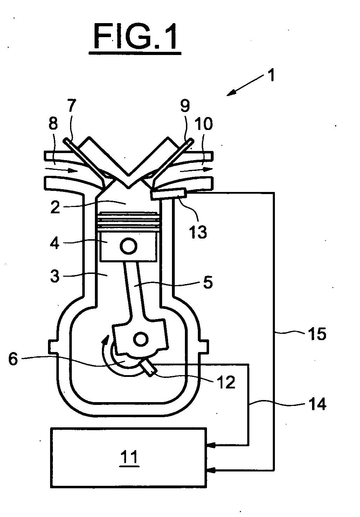

Tel qu'il est illustré sur la figure 1, le moteur à combustion interne 1 diesel ou essence, représenté schématiquement, comprend au moins une chambre de combustion 2 illustrée sur la figure 1 dans la partie haute d'un cylindre 3, à l'intérieur duquel se déplace un piston 4 connecté à une bielle 5 dont l'extrémité est reliée à un vilebrequin 6. Une soupape d'admission 7 permet de commander l'admission en ouvrant ou obturant le conduit d'admission 8, en communication avec la chambre de combustion 2. Une soupape d'échappement 9 permet quant à elle, d'obturer ou d'ouvrir le passage des gaz d'échappement en provenance de la chambre de combustion 2 vers le conduit d'échappement 10. Une unité électronique de détection 11 assure la détection du commencement de la combustion du moteur 1 et reçoit à cet effet un certain nombre d'information en provenance de différents capteurs tels qu'un capteur 12 permettant de mesurer le mouvement de rotation du vilebrequin, et un capteur 13 permettant de mesurer la pression dans la chambre de combustion.

Le capteur 12 permettant de mesurer les mouvements de rotation du vilebrequin est relié à l'unité de commande électronique 11 par une connexion 14. Le capteur 13 permettant de mesurer la pression dans la chambre de combustion, est relié à l'unité de commande électronique 11 par une connexion 15. A partir des mesures délivrées par les deux capteurs 12 et 13, l'unité électronique de commande 11 va pouvoir détecter le commencement de la phase de combustion du moteur 1.

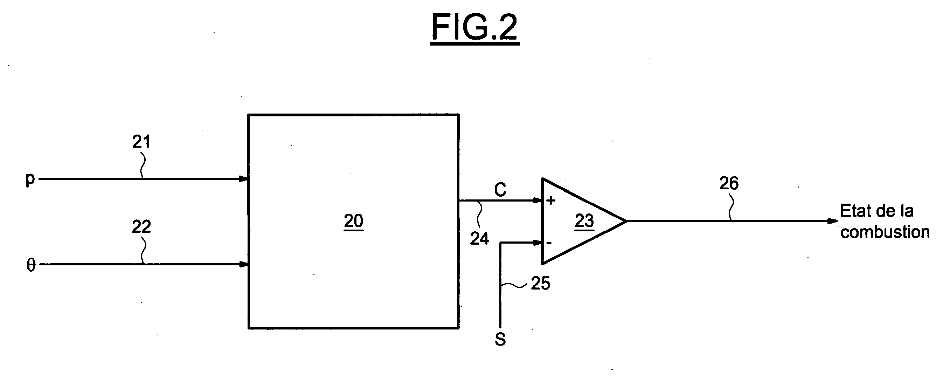

La figure 2, représente un mode de réalisation de l'unité électronique de détection 11.

L'unité électronique de détection 11 comprend un moyen de calcul 20 d'une variable C représentative de l'état de la combustion, qui peut être réalisé à l'aide d'un circuit.

Le moyen de calcul 20 reçoit en entrée par une connexion 21 la valeur p de pression régnant dans la chambre de combustion. Il reçoit également par une connexion 22 la valeur $\theta$ de la position angulaire du vilebrequin.

A partir de ces deux variables p et $\theta$, le moyen de calcul 20 estime en permanence la variable C.

Cette variable C est délivrée en entrée d'un comparateur 23 par une connexion 24. Le comparateur peut être réalisé par exemple à l'aide d'un circuit.

Sur l'autre entrée du comparateur 23, une valeur de seuil S est délivrée par une connexion 25.

Le comparateur 23 effectue une comparaison entre la variable C représentative de l'état de la combustion et la valeur de seuil S. Tant que C est inférieure ou égale à S, on estime que la combustion n'a pas commencé. Par contre, dès que la valeur de C est supérieure à S, on estime que la combustion a débuté. Le comparateur délivre en sortie par une connexion 26 l'état de la combustion en fonction du résultat de la comparaison entre C et S.

De façon à déterminer l'état de la combustion, le moyen de calcul 20 calcule la dérivée de l'énergie dans le cylindre Q par rapport à l'angle vilebrequin $\theta$. En outre, étant donné qu'en pratique le calcul de $dQ/d\theta$ donne une information bruitée, cette dérivée est divisée par le volume de la chambre de combustion V de façon à diminuer l'amplitude du bruit sur le dégagement d'énergie Q dans les phases où le bruit est le plus important (c'est-à-dire après et avant les points morts bas). Cette opération augmente alors le rapport signal/bruit et diminue les contraintes sur le filtrage de la pression à mettre en place.

11 vient que la variable C représentative de l'état de la combustion est égal à :

$$C = \frac{1}{V}\frac{dQ}{d\theta}. \qquad\qquad (1)$$

Le calcul de dQ/dθ est complexe. Par conséquent, des simplifications sont effectuées de façon à diminuer la puissance nécessaire pour réaliser le calcul. Il est alors possible d'inclure le dispositif selon l'invention dans un système électronique embarqué à bord d'un véhicule automobile.

Comme point de départ à la simplification de l'expression de la variable C, on utilise les équations thermodynamiques exprimant le dégagement d'énergie apparent dQ/dθ du gaz présent dans la chambre, bien connu de l'homme du métier :

$$\frac{dQ}{d\theta} = \frac{1}{\gamma - 1} V \left( \frac{p}{m} \frac{dm}{d\theta} + \frac{p}{T} \frac{dT}{d\theta} - \frac{p}{V} \frac{dV}{d\theta} \right) + \frac{\gamma}{\gamma - 1} p \frac{dV}{d\theta}, \qquad (2)$$

où :

Q représente la quantité d'énergie présente dans les gaz de la chambre de combustion ;
θ représente l'angle vilebrequin ;
γ représente le rapport polytropique ;
V représente le volume de la chambre de combustion ;
p représente la pression dans le chambre de combustion ;
m représente la masse de gaz enfermée dans le cylindre ;
T représente la température dans la chambre de combustion.

En variante, la valeur de l'angle vilebrequin θ pourrait être remplacée par le temps. Cependant, il est préférable d'utiliser l'angle θ de façon à rendre le système indépendant de la vitesse de rotation du moteur.

En faisant l'hypothèse que la masse m de gaz enfermée dans le cylindre est constante, c'est-à-dire que l'on néglige la masse injectée, l'expression de la variable C ci-dessus devient :

$$C = \frac{1}{V} \frac{dQ}{d\theta} = \frac{1}{\gamma - 1} \left( \frac{p}{T} \frac{dT}{d\theta} \right) + \frac{p}{V} \frac{dV}{d\theta}, \qquad (3)$$

Le rapport des valeurs spécifiques ou coefficient polytropique γ est considéré ici comme constant avant la combustion et lors des premiers instants de la combustion. Il peut être par exemple pris égal à 1,4.

L'estimation du volume V et de sa dérivée dV/dθ, se fait à l'aide d'une table donnant le volume V pour chaque valeur de l'angle vilebrequin θ, puisque la relation entre les deux variables est immuable pour une géométrie donnée du moteur. L'estimation de la température T et de sa dérivée dT/dθ est réalisée en considérant le gaz parfait, c'est-à-dire qu'on a la relation PV=mrT où le produit mr est constant et r est la constante des gaz parfaits massique.

Il vient alors :

$$\frac{1}{T} \frac{dT}{d\theta} = \frac{1}{p} \frac{dp}{d\theta} + \frac{1}{V} \frac{dV}{d\theta}, \qquad (4)$$

De façon à supprimer l'expression de la dérivée de la pression dp/dθ qui est une source de bruit pour le calcul, on transforme l'expression du produit : $\frac{1}{T} \frac{dT}{d\theta}$.

Pour cela, on discrétise l'expression et on considère les valeurs prises par le volume V, la pression p, et la température T aux angles vilebrequins θ et θ-Δθ, où Δθ est constant et représente un pas de calcul choisi.

L'expression ci-dessus devient alors :

$$\frac{1}{T_\theta}\frac{T_\theta - T_{\theta-\Delta\theta}}{\Delta\theta} = \frac{1}{p_\theta}\frac{p_\theta - p_{\theta-\Delta\theta}}{\Delta\theta} + \frac{1}{V_\theta}\frac{V_\theta - V_{\theta-\Delta\theta}}{\Delta\theta}, \qquad (5)$$

où :

$\theta$ représente l'angle vilebrequin,

$T_\theta$ représente la température dans la chambre de combustion pour un angle vilebrequin $\theta$,

$\Delta\theta$ représente le pas de variation de l'angle vilebrequin $\theta$.

$T_{\theta-\Delta\theta}$ représente la température dans la chambre de combustion pour un angle vilebrequin $\theta$-$\Delta\theta$,

$P_\theta$ représente la pression dans la chambre de combustion pour un angle vilebrequin $\theta$,

$P_{\theta-\Delta\theta}$ représente la pression dans la chambre de combustion pour un angle vilebrequin $\theta$-$\Delta\theta$,

$V_\theta$ représente le volume dans la chambre de combustion pour un angle vilebrequin $\theta$,

$V_{\theta-\Delta\theta}$ représente le volume dans la chambre de combustion pour un angle vilebrequin $\theta$-$\Delta\theta$.

A partir de l'équation précédente, on en déduit une expression de la température T en fonction de l'angle $\theta$ et de l'angle $\theta$-$\Delta\theta$. Il vient :

$$T_\theta = T_{\theta-\Delta\theta}\left(\frac{1}{\dfrac{p_{\theta-\Delta\theta}}{p_\theta} + \dfrac{V_{\theta-\Delta\theta}}{V_\theta} - 1}\right). \qquad (6)$$

La température est donc estimée de manière récursive pour chaque valeur de l'angle $\theta$, à partir d'une température initiale correspondant à la température dans le cylindre à l'instant de la fermeture de la soupape d'admission. On peut par exemple la prendre constante et égale à 300 K, ou bien la faire dépendre de la température d'air admis. La valeur de cette dernière peut être obtenue à l'aide d'un capteur de mesure.

En pratique, l'expression de la variable C est également discrétisée. La valeur de C pour chaque valeur de $\theta$ est donc donnée par la formule suivante :

$$C_\theta = \frac{1}{\gamma-1}\left(\frac{p_\theta}{T_\theta}\frac{T_\theta - T_{\theta-\Delta\theta}}{\Delta\theta}\right) + \frac{p_\theta}{V_\theta}\frac{V_\theta - V_{\theta-\Delta\theta}}{\Delta\theta}. \qquad (7)$$

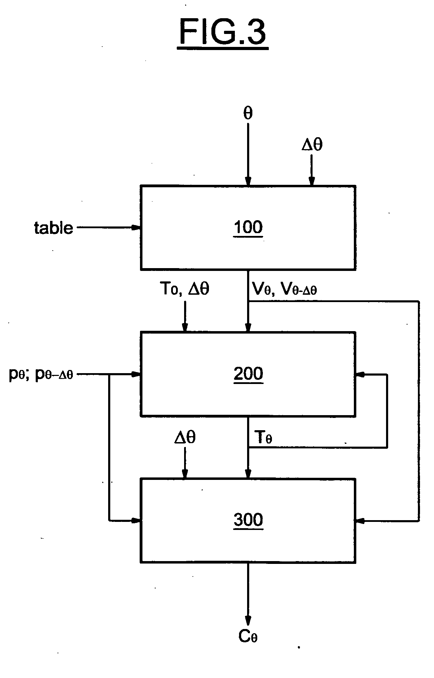

Le diagramme de la figure 3 illustre un mode de mise des équations mathématiques énoncées ci-dessus.

Lors d'une première étape 100, on détermine le volume $V_\theta$ et $V_{\theta-\Delta\theta}$ à l'aide d'une table, et pour un pas $\Delta\theta$ donné.

Puis on détermine au cours d'une étape 200 la température $T_\theta$ de manière récursive à partir d'une température initiale $T_0$ donnée, et en fonction du pas d'angle vilebrequin donné $\Delta\theta$. La température $T_\theta$ est déterminée de manière récursive selon la relation référencée (6) ci-dessus.

On détermine alors la variable $C_\theta$ lors d'une étape 300 selon la relation (7) donnée ci-dessus en fonction de la pression, du volume, de la température et du pas d'angle vilebrequin donné.

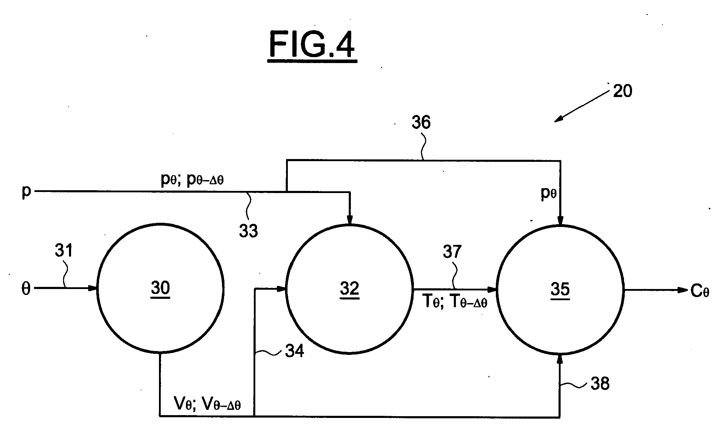

Un mode de réalisation du moyen de calcul 20 pour la mise en oeuvre du procédé tel que décrit ci-dessus est représenté sur la figure 4.

De façon à déterminer la variable $C_\theta$ pour un angle vilebrequin $\theta$ donné selon l'expression (7) établie ci-dessus, le moyen de calcul 20 comprend un premier moyen de calcul 30.

Ce premier moyen 30 est apte à calculer les volumes $V_\theta$ et $V_{\theta-\Delta\theta}$ à partir de l'angle vilebrequin $\theta$ délivré au premier moyen de calcul 30 par une connexion 31.

Le moyen 20 comprend également un deuxième moyen de calcul 32 apte à calculer les températures aux angles vilebrequin $\theta$ et $\theta$-$\Delta\theta$ à partir de la pression de la chambre de combustion aux angles vilebrequin $\theta$ et $\theta$-$\Delta\theta$ délivrés au deuxième moyen de calcul 32 par une connexion 33. Le deuxième moyen de calcul 32 reçoit également en entrée des volumes $V_\theta$ et $V_{\theta-\Delta\theta}$ délivrés par le premier moyen de calcul 30 au deuxième moyen de calcul 32 par une connexion 34.

Le moyen de calcul 20 comprend également un troisième moyen de calcul 35 apte à calculer la variable C représentative de l'état de combustion pour un angle vilebrequin $\theta$. Le troisième moyen de calcul 35 reçoit en entrée par une connexion 36 la pression $p_\theta$ pour un angle vilebrequin $\theta$ par une connexion 36. Il reçoit également les températures $T_\theta$ et $T_{\theta-\Delta\theta}$ déterminées par le deuxième moyen de calcul 32 par l'intermédiaire d'une connexion 37. En outre, le troisième moyen de calcul 35 reçoit les volumes $V_\theta$ et $V_{\theta-\Delta\theta}$ déterminés par le premier moyen de calcul 30 et délivrés par l'intermédiaire d'une connexion 38. Le troisième moyen de calcul élabore alors la variable $C_\theta$ pour un angle vilebrequin $\theta$ en utilisant la relation précitée.

La détection du début de la combustion peut servir lors des stratégies d'estimation ou de régulation du bruit des moteurs à combustion interne, ainsi qu'à l'optimisation du couple par régulation du placement de la combustion dans le cycle thermodynamique d'un moteur.

En outre, il peut servir au recalage de la caractéristique des injecteurs de façon à ajuster les quantités de carburant injectées.

Le dispositif de détection tel que décrit ci-avant peut entrer dans la composition d'un système d'aide à la mise au point des moteurs sur des bancs de test mais il peut être également intégré dans des systèmes de contrôle moteur embarqués.

Dans le cas des stratégies d'estimation ou de régulation du bruit des moteurs, le dispositif est particulièrement utile dans la résolution des problèmes de fenêtrage notamment dans les cas de combustion homogène (« moteur HCCI » selon une dénomination couramment utilisée par l'homme du métier). En effet, les systèmes de mesure du bruit de combustion basés sur l'observation de la dérivée de la pression dans la chambre (brevet FR 2 857 410), sont contraints d'observer la pression dans une fenêtre temporelle ouverte au moment de l'injection de carburant, afin de ne pas confondre le gradient de pression dû à la combustion avec le gradient de pression naturel dû à la compression du gaz dans la chambre de combustion. Par conséquent, cette méthode n'est pas utilisable sur des moteurs HCCI étant donné que dans ce type de moteur, d'une part l'injection est très précoce dans le cycle thermodynamique et ne peut pas servir à déclencher l'ouverture de cette fenêtre d'observation, et d'autre part, le début de la phase de combustion peut intervenir à n'importe quel instant pendant le phase de compression rendant difficile le placement de la fenêtre d'observation.

**Revendications**

1. Dispositif pour la détection en temps réel du commencement de la phase de combustion d'un moteur à combustion interne, notamment pour véhicule automobile, comprenant un moyen de calcul (20) d'une variable (C) représentative de l'évolution de la combustion en fonction de la pression de la chambre de combustion et de l'angle vilebrequin, et un moyen de comparaison (23) de ladite variable (C) avec un seuil (S) de façon à déterminer l'état de la combustion dudit moteur, ladite variable (C) étant fonction de la dérivée de la quantité d'énergie (Q) présente dans les gaz de la chambre de combustion par rapport à l'angle vilebrequin (θ), **caractérisé par le fait que** le moyen de calcul de ladite variable comprend un premier moyen de calcul (30) du volume (V) de la chambre de combustion en fonction de la valeur de l'angle vilebrequin (θ), un deuxième moyen de calcul (32) de la température (T) dans la chambre de combustion en fonction du volume (V) calculé et de la pression dans la chambre de combustion, ledit deuxième moyen de calcul (32) étant apte à calculer la température (T) dans la chambre de combustion de manière récursive à partir de la température initiale dans la chambre de combustion et pour une variation de l'angle vilebrequin (Δθ) d'un pas prédéterminé, et un troisième moyen de calcul (35) de la variable C en fonction de la pression (p) dans la chambre de combustion, de la température (T) et du volume (V) calculés.

2. Dispositif selon la revendication 1, dans lequel le moyen de calcul de ladite variable comprend un moyen de lissage de la courbe représentative de la dérivée de la quantité d'énergie présente dans les gaz de la chambre de combustion par rapport à l'angle vilebrequin, ledit moyen de lissage étant apte à diviser ladite dérivée par le volume de la chambre de combustion tel que :

$$C = \frac{1}{V}\frac{dQ}{d\theta},$$

où :

    C est ladite variable,
    V représente le volume de la chambre de combustion,
    Q représente la quantité d'énergie présente dans les gaz de la chambre de combustion,
    θ représente l'angle vilebrequin.

3. Utilisation d'un dispositif selon l'une quelconque des revendications précédentes, embarqué à bord d'un véhicule automobile pour l'estimation et/ou la régulation du bruit du moteur à combustion interne équipant le véhicule.

4. Utilisation d'un dispositif selon l'une quelconque des revendications 1 ou 2, embarqué à bord d'un véhicule automobile pour l'optimisation du couple du moteur à combustion interne équipant le véhicule.

5. Utilisation d'un dispositif selon l'une quelconque des revendications 1 ou 2, embarqué à bord d'un véhicule automobile pour l'ajustage des quantités de carburant injectées au cours de la combustion du moteur à combustion interne équipant le véhicule.

6. Utilisation d'un dispositif selon l'une quelconque des revendications 1 ou 2, pour la mise au point d'un moteur sur un banc de test.

7. Procédé de détection en temps réel du commencement de la phase de combustion d'un moteur à combustion interne notamment pour véhicule automobile, comprenant une phase de calcul d'une variable (C) représentative de l'évolution de la combustion en fonction de la pression (p) de la chambre de combustion et de l'angle vilebrequin (θ), et une phase de comparaison de ladite variable avec un seuil (S) de façon à déterminer l'état de la combustion dudit moteur, ladite variable (C) étant calculée en fonction de la dérivée de la quantité d'énergie (Q) présente dans les gaz de la chambre de combustion par rapport à l'angle vilebrequin (θ), **caractérisé par le fait que** le calcul de ladite variable (C) comprend un premier calcul du volume (V) de la chambre de combustion à partir de la valeur de l'angle vilebrequin (θ), un deuxième calcul de la température (T) dans la chambre de combustion à partir du volume (V) calculé et de la pression (p) dans la chambre de combustion, la température (T) étant calculée de manière récursive à partir de la température initiale dans la chambre de combustion et pour une variation de l'angle vilebrequin d'un pas (Δθ) prédéterminé tel que :

$$T_\theta = T_{\theta-\Delta\theta}\left(\cfrac{1}{\cfrac{p_{\theta-\Delta\theta}}{p_\theta} + \cfrac{V_{\theta-\Delta\theta}}{V_\theta} - 1}\right),$$

où

θ représente l'angle vilebrequin,
$T_\theta$ représente la température dans la chambre de combustion pour un angle vilebrequin θ,
Δθ représente le pas de variation de l'angle vilebrequin θ,
$T_{\theta-\Delta\theta}$ représente la température dans la chambre de combustion pour un angle vilebrequin θ-Δθ,
Pθ représente la pression dans la chambre de combustion pour un angle vilebrequin θ,
Pθ-Δθ représente la pression dans la chambre de combustion pour un angle vilebrequin θ-Δθ,
$V_\theta$ représente le volume dans la chambre de combustion pour un angle vilebrequin θ,
$V_{\theta-\Delta\theta}$ représente le volume dans la chambre de combustion pour un angle vilebrequin θ-Δθ,
et un troisième calcul de la variable à partir de la pression (p) dans la chambre de combustion, de la température (T) et du volume (V) calculés tel que pour une masse de gaz dans le cylindre constante :

$$C = \frac{1}{V}\frac{dQ}{d\theta} = \frac{1}{\gamma-1}\left(\frac{p}{T}\frac{dT}{d\theta}\right) + \frac{p}{V}\frac{dV}{d\theta},$$

où
C est ladite variable,
V représente le volume de la chambre de combustion,
Q représente la quantité d'énergie présente dans les gaz de la chambre de combustion,
p représente la pression dans la chambre de combustion,
θ représente l'angle vilebrequin,
T représente la température dans la chambre de combustion,

γ représente le rapport de la chaleur massique à pression constante et la chaleur massique à volume constant,

8. Procédé selon la revendication précédente, dans lequel la phase de calcul comprend une étape de lissage de la courbe représentative de la dérivée de la quantité d'énergie (Q) présente dans les gaz de la chambre de combustion par rapport à l'angle vilebrequin, en divisant ladite dérivée par le volume (V) de la chambre de combustion tel que :

$$C = \frac{1}{V}\frac{dQ}{d\theta},$$

où :

C est ladite variable,
V représente le volume de la chambre de combustion,
Q représente la quantité d'énergie présente dans les gaz de la chambre de combustion,
θ représente l'angle vilebrequin.

**Claims**

1. Device for detecting in real time the beginning of the combustion phase of an internal combustion engine, particularly for a motor vehicle, comprising a means (20) for computing a variable (C) representative of the evolution of the combustion as a function of the pressure in the combustion chamber and of the crankshaft angle, and a means (23) for comparing the said variable (C) with a threshold (S) so as to determine the state of combustion of the said engine, the said variable (C) being a function of the differential coefficient of the quantity of energy (Q) present in the gases in the combustion chamber relative to the crankshaft angle (θ), **characterized in that** the means for computing the said variable comprises a first means (30) for computing the volume (V) of the combustion chamber as a function of the value of the crankshaft angle (θ), a second means (32) for computing the temperature (T) in the combustion chamber as a function of the computed volume (V) and of the pressure in the combustion chamber, the said second computing means (32) being capable of computing the temperature (T) in the combustion chamber in a recursive manner based on the initial temperature in the combustion chamber and for a variation of the crankshaft angle (Δθ) of a predetermined pitch, and a third means (35) for computing the variable (C) as a function of the pressure (p) in the combustion chamber, the computed temperature (T) and the computed volume (V).

2. Device according to Claim 1, in which the means for computing the said variable comprises a means for smoothing the curve representative of the differential coefficient of the quantity of energy present in the gases of the combustion chamber relative to the crankshaft angle, the said smoothing means being capable of dividing the said differential coefficient by the volume of the combustion chamber such that:

$$C = \frac{1}{V}\frac{dQ}{d\theta},$$

where:

C is the said variable,
V represents the volume of the combustion chamber,
Q represents the quantity of energy present in the gases in the combustion chamber,
θ represents the crankshaft angle.

3. Use of a device according to either one of the preceding claims, on board a motor vehicle for the estimation and/or regulation of the noise of the internal combustion engine fitted to the vehicle.

4. Use of a device according to either one of Claims 1 or 2, on board a motor vehicle, for the optimization of the torque of the internal combustion engine fitted to the vehicle.

**5.** Use of a device according to either one of Claims 1 or 2, on board a motor vehicle, for adjusting the quantities of fuel injected during the combustion of the internal combustion engine fitted to the vehicle.

**6.** Use of a device according to either one of Claims 1 or 2, for tuning an engine on a test bench.

**7.** Method for detecting in real time the beginning of the combustion phase of an internal combustion engine particularly for a motor vehicle, comprising a phase of computing a variable (C) representative of the evolution of the combustion as a function of the pressure (p) in the combustion chamber and of the crankshaft angle ($\theta$), and a phase of comparing the said variable with a threshold (S) so as to determine the state of combustion of the said engine, the said variable (C) being computed as a function of the differential coefficient of the quantity of energy (Q) present in the gases in the combustion chamber relative to the crankshaft angle ($\theta$), **characterized in that** the computation of the said variable (C) comprises a first computation of the volume (V) of the combustion chamber based on the value of the crankshaft angle ($\theta$), a second computation of the temperature (T) in the combustion chamber based on the computed volume (V) and the pressure (p) in the combustion chamber, the temperature (T) being computed in a recursive manner based on the initial temperature in the combustion chamber and for a variation of the crankshaft angle of a predetermined pitch ($\Delta\theta$) such that:

$$T_\theta = T_{\theta-\Delta\theta}\left(\cfrac{1}{\cfrac{p_{\theta-\Delta\theta}}{p_\theta} + \cfrac{V_{\theta-\Delta\theta}}{V_\theta} - 1}\right),$$

where

$\theta$ represents the crankshaft angle,
$T_\theta$ represents the temperature in the combustion chamber for a crankshaft angle $\theta$,
$\Delta\theta$ represents the pitch of variation of the crankshaft angle $\theta$,
$T_{\theta-\Delta\theta}$ represents the temperature in the combustion chamber for a crankshaft angle $\theta-\Delta\theta$,
$P\theta$ represents the pressure in the combustion chamber for a crankshaft angle $\theta$,
$P\theta-\Delta\theta$ represents the pressure in the combustion chamber for a crankshaft angle $\theta-\Delta\theta$,
$V_\theta$ represents the volume in the combustion chamber for a crankshaft angle $\theta$,
$V_{\theta-\Delta\theta}$ represents the volume in the combustion chamber for a crankshaft angle $\theta-\Delta\theta$,
and a third computation of the variable based on the pressure (p) in the combustion chamber, of the computed temperature (T) and of the computed volume (V) such that, for a constant weight of gas in the cylinder:

$$C = \frac{1}{V}\frac{dQ}{d\theta} = \frac{1}{\gamma-1}\left(\frac{p}{T}\frac{dT}{d\theta}\right) + \frac{p}{V}\frac{dV}{d\theta},$$

where
C is the said variable,
V represents the volume of the combustion chamber,
Q represents the quantity of energy present in the gases of the combustion chamber,
p represents the pressure in the combustion chamber,
$\theta$ represents the crankshaft angle,
T represents the temperature in the combustion chamber,
$\gamma$ represents the ratio of the specific heat at constant pressure and the specific heat at constant volume.

**8.** Method according to the preceding claim, in which the computing phase comprises a step of smoothing the curve representative of the differential coefficient of the quantity of energy (Q) present in the gases of the combustion chamber relative to the crankshaft angle, by dividing the said differential coefficient by the volume (V) of the combustion chamber such that:

$$C = \frac{1}{V}\frac{dQ}{d\theta},$$

where:

C is the said variable,
V represents the volume of the combustion chamber,
Q represents the quantity of energy present in the gases of the combustion chamber,
$\theta$ represents the crankshaft angle.

**Patentansprüche**

1. Vorrichtung zur Echtzeiterfassung des Beginns der Verbrennungsphase eines Verbrennungsmotors, insbesondere für ein Kraftfahrzeug, mit einem Mittel (20) zur Berechnung einer Variablen (C), die den Verlauf der Verbrennung als Funktion des Drucks der Brennkammer und des Kurbelwinkels darstellt, und einem Mittel (23) zum Vergleich der Variablen (C) mit einem Schwellwert (S), um den Verbrennungszustand des Motors zu bestimmen, wobei die Variable (C) eine Funktion der Ableitung der in den Gasen der Brennkammer vorhandenen Energiemenge (Q) bezüglich des Kurbelwinkels ($\theta$) ist, **dadurch gekennzeichnet, dass** das Mittel zur Berechnung der Variablen ein erstes Mittel (30) zur Berechnung des Volumens (V) der Brennkammer als Funktion des Werts des Kurbelwinkels ($\theta$), ein zweites Mittel (32) zur Berechnung der Temperatur (T) in der Brennkammer als Funktion des berechneten Volumens (V) und des Drucks in der Brennkammer, wobei das zweite Berechnungsmittel (32) die Temperatur (T) in der Brennkammer rekursiv anhand der Anfangstemperatur in der Brennkammer und für eine Änderung des Kurbelwinkels ($\Delta\theta$) um einen vorbestimmten Abstand berechnen kann, und ein drittes Mittel (35) zur Berechnung der Variablen (C) als Funktion des Drucks (p) in der Brennkammer, der berechneten Temperatur (T) und des berechneten Volumens (V) umfasst.

2. Vorrichtung nach Anspruch 1, bei der das Mittel zur Berechnung der Variablen ein Mittel zum Glätten der die Ableitung der in den Gasen der Brennkammer vorhandenen Energiemenge bezüglich des Kurbelwinkels darstellenden Kurve umfasst, wobei das Glättmittel die Ableitung durch das Volumen der Brennkammer teilen kann, so dass:

$$C = \frac{1}{V}\frac{dQ}{d\theta},$$

wobei:

C die Variable ist,
V das Volumen der Brennkammer darstellt,
Q die in den Gasen der Brennkammer vorhandene Energiemenge darstellt,
$\theta$ den Kurbelwinkel darstellt.

3. Verwendung einer Vorrichtung nach einem der vorhergehenden Ansprüche an Bord eines Kraftfahrzeugs zur Schätzung und/oder Regulierung des Lärms des am Fahrzeug vorgesehenen Verbrennungsmotors.

4. Verwendung einer Vorrichtung nach einem der Ansprüche 1 oder 2 an Bord eines Kraftfahrzeugs zur Optimierung des Drehmoments des am Fahrzeug vorgesehenen Verbrennungsmotors.

5. Verwendung einer Vorrichtung nach einem der Ansprüche 1 oder 2 an Bord eines Kraftfahrzeugs zur Einstellung der Kraftstoffmengen, die im Verlauf der Verbrennung durch den am Fahrzeug vorgesehenen Verbrennungsmotor eingespritzt werden.

6. Verwendung einer Vorrichtung nach einem der Ansprüche 1 oder 2 zur Einstellung eines Motors auf einer Prüfbank.

7. Verfahren zur Echtzeiterfassung des Beginns der Verbrennungsphase eines Verbrennungsmotors, insbesondere für ein Kraftfahrzeug, umfassend eine Phase zur Berechnung einer Variablen (C), die den Verlauf der Verbrennung als Funktion des Drucks (p) der Brennkammer und des Kurbelwinkels ($\theta$) darstellt, und eine Phase des Vergleichs der Variablen mit einem Schwellwert (S), um den Verbrennungszustand des Motors zu bestimmen, wobei die Variable (C) als eine Funktion der Ableitung der in den Gasen der Brennkammer vorhandenen Energiemenge (Q) bezüglich des Kurbelwinkels ($\theta$) berechnet wird, **dadurch gekennzeichnet, dass** die Berechnung der Variablen (C) eine erste Berechnung des Volumens (V) der Brennkammer anhand des Werts des Kurbelwinkels ($\theta$), eine zweite Berechnung der Temperatur (T) in der Brennkammer anhand des berechneten Volumens (V) und des Drucks (p) in der Brennkammer, wobei die Temperatur (T) rekursiv anhand der Anfangstemperatur in der Brennkammer und für eine Änderung des Kurbelwinkels ($\Delta\theta$) um einen vorbestimmten Abstand berechnet wird, so dass:

$$T_\theta = T_{\theta-\Delta\theta}\left(\frac{1}{\dfrac{p_{\theta-\Delta\theta}}{p_\theta} + \dfrac{V_{\theta-\Delta\theta}}{V_\theta} - 1}\right),$$

wobei

$\theta$ den Kurbelwinkel darstellt,
$T_\theta$ die Temperatur (T) in der Brennkammer für einen Kurbelwinkel $\theta$ darstellt,
$\Delta\theta$ den Änderungsabstand des Kurbelwinkels $\theta$ darstellt,
$T\theta-\Delta\theta$ die Temperatur in der Brennkammer für einen Kurbelwinkel $\theta-\Delta\theta$ darstellt,
$P_e$ den Druck in der Brennkammer für einen Kurbelwinkel $\theta$ darstellt,
$P_e-\theta$ den Druck in der Brennkammer für einen Kurbelwinkel $\theta-\Delta\theta$ darstellt,
$V_\theta$ das Volumen in der Brennkammer für einen Kurbelwinkel $\theta$ darstellt,
$V_{\theta-\Delta\theta}$ das Volumen in der Brennkammer für einen Kurbelwinkel $\theta-\Delta\theta$ darstellt, und eine dritte Berechnung der Variablen anhand des Drucks (p) in der Brennkammer, der berechneten Temperatur (T) und des berechneten Volumens (V) umfasst, so dass für eine konstante Gasmasse in dem Zylinder:

$$C = \frac{1}{V}\frac{dQ}{d\theta} = \frac{1}{\gamma-1}\left(\frac{p}{T}\frac{dT}{d\theta}\right) + \frac{p}{V}\frac{dV}{d\theta},$$

wobei:

C die Variable ist,
V das Volumen der Brennkammer darstellt,
Q die in den Gasen der Brennkammer vorhandene Energiemenge darstellt,
p den Druck in der Brennkammer darstellt,
$\theta$ den Kurbelwinkel darstellt,
T die Temperatur in der Brennkammer darstellt,
$\gamma$ das Verhältnis der spezifischen Wärme bei konstantem Druck zu der spezifischen Wärme bei konstantem Volumen darstellt.

8. Verfahren nach dem vorhergehenden Anspruch, bei dem die Berechnungsphase einen Schritt des Glättens der die Ableitung der in den Gasen der Brennkammer vorhandenen Energiemenge (Q) bezüglich des Kurbelwinkels darstellenden Kurve, indem die Ableitung durch das Volumen (V) der Brennkammer geteilt wird, umfasst, so dass:

$$C = \frac{1}{V}\frac{dQ}{d\theta},$$

wobei:

C die Variable ist,
V das Volumen der Brennkammer darstellt,
Q die in den Gasen der Brennkammer vorhandene Energiemenge darstellt,
θ den Kurbelwinkel darstellt.

$$C = \frac{1}{V}\frac{dQ}{d\theta},$$

# FIG.1

1

7    9
8    10

2
13

4
3    5

15

6    12
14

11

# FIG.2

EP 1 920 144 B1

# FIG.3

FIG.4

**RÉFÉRENCES CITÉES DANS LA DESCRIPTION**

**Documents brevets cités dans la description**

- US 5359883 A
- WO 0248522 A
- US 20030145829 A
- WO 0225237 A
- EP 1092968 A
- FR 2857410